# EUROPEAN PATENT APPLICATION

(11) **EP 2 430 907 A1**
(43) Date of publication of application: **21.03.2012**
(21) Application number: 11180915.8
(22) Date of filing: 12.09.2011
(51) Int. Cl.: A01F 15/08, F16H 1/20, F16H 55/17

(54) **Reduction gear assembly, particularly for users with periodic power peaks**

(30) Priority: 21.09.2010 IT MO20100261
(71) Applicant: Comer Industries S.p.A., 20145 Milano (IT)
(72) Inventor: Tenca, Gianni, 46019 Viadana MN (IT); Brunazzi, Achille, 42044 Gualtieri, Frazione Santa Vittoria RE (IT)
(74) Representative: Modiano, Micaela Nadia

(57) **Abstract**

A reduction gear assembly (1), particularly for users with periodic power peaks, comprising a train of gears (2, 3, 4, 5) which mutually mesh, its particularity residing in the fact that it comprises at least one gear (5) that has a face width variable along its pitch circle (9).

## Description

The present invention relates to a reduction gear assembly, particularly for users with periodic power peaks such as baling presses.

Currently, for the baling of grass-like material originating from the mowing of crops of various kinds, such as for example grass or hay, baling presses are known which are constituted essentially by a prism-shaped forming chamber in which the material to be compacted is introduced and in which a pressing piston can slide which presses periodically the material introduced in the forming chamber until said chamber is completely full and a prism-shaped bale of pressed material is formed.

More precisely, the pressing piston can slide alternately from a bottom dead center position to a top dead center position so as to allow filling of the forming chamber with the material to be compacted, during the stroke between the top dead center and the bottom dead center, and so as to allow pressing of the material to be compacted into bales, during the stroke between the bottom dead center and the top dead center.

These baling presses are generally provided with wheels adapted to make it possible to tow them by means of a tractor or the like on a field worked previously by mowing machines or the like and therefore covered with mowed grass-like material.

By means of adapted gathering systems arranged in series with adapted cutting elements, the grass-like material that is present on the field is gathered, shredded and introduced in the forming chamber so that it can be pressed and baled in bales which are then unloaded automatically from the baling press and left on said field.

More precisely, these baling presses are actuated by means of a Cardan shaft which is connected to the power take-off of the tractor and have a reduction assembly in input which transmits motion to the moving parts of the baling press.

Owing to the great force to be transmitted to the piston during pressing, the reduction assemblies are generally quite large and heavy.

For example, a typical reduction unit for this type of use generally has a first reduction stage that is defined by a pair of bevel gears and one or more reduction stages defined by pairs of cylindrical gears.

Regardless of the number of stages present, the final gear system in any case has a gear of considerable size and weight, which is keyed on an output shaft with which the mechanisms responsible for the motion of the pressing piston are associated.

Generally, two cranks are keyed on the output shaft and, by means of a pusher crank system, actuate with an alternating translational motion the piston in the forming chamber.

Moreover, at the intermediate shafts of the reduction assembly there can be secondary outputs for the actuation of auxiliary elements.

These baling presses of the known type are not free from drawbacks, which include the fact that the reduction assembly is considerably large, bulky and heavy because it has to transmit high power levels in order to allow the forming of the bales.

More precisely, these considerable dimensions, bulk and weight are due to the gear that is keyed on the output shaft, since by being the slowest gear of the reduction assembly it has a very large diameter and a face width that is proportional to the maximum force that can be transmitted during the bale forming process.

The aim of the present invention is to provide a reduction gear assembly, particularly for users with periodic power peaks such as baling presses, that has smaller dimensions and lower weight than the background art, so as to reduce the energy required for its actuation and accordingly improve the efficiency of the machine on which it is installed.

Within this aim, an object of the present invention is to provide a reduction gear assembly that makes it possible to reduce the CO₂ emissions of the tractor that tows the machine on which it is installed thanks to its weight reduction.

Another object of the present invention is to provide a reduction gear assembly that is economically competitive with respect to those of the background art.

This aim, as well as these and other objects which will become more apparent hereinafter, are achieved by a reduction gear assembly, particularly for users with periodic power peaks, characterized in that it comprises at least one gear that has a face width variable along the pitch circle of said gear.

Further characteristics and advantages of the present invention will become more apparent from the detailed description of a preferred but not exclusive embodiment of a reduction gear assembly, particularly for users with periodic power peaks, illustrated by way of non-limiting example in the accompanying drawings, wherein:

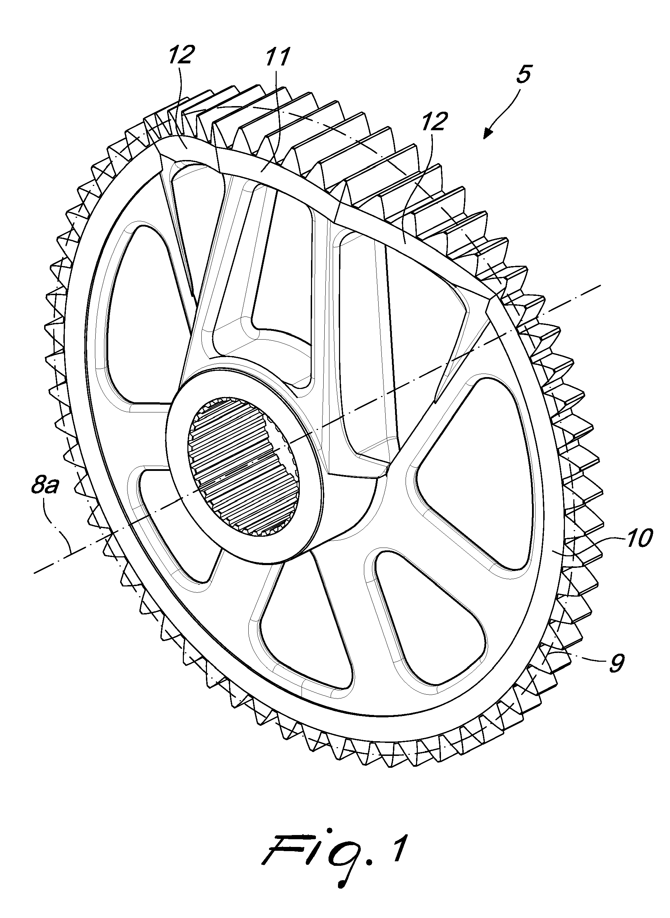

Figure 1 is a perspective view of the gear of the reduction gear assembly, according to the invention, which has a face width that is variable along its pitch circle;

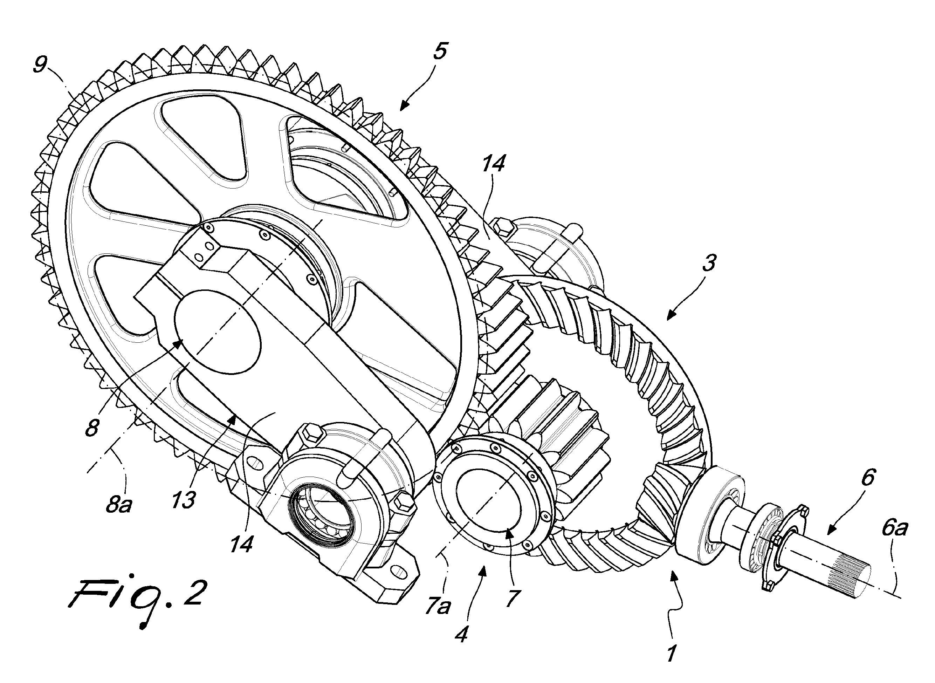

Figure 2 is a perspective view of the train of gears that form the reduction gear assembly, according to the present invention;

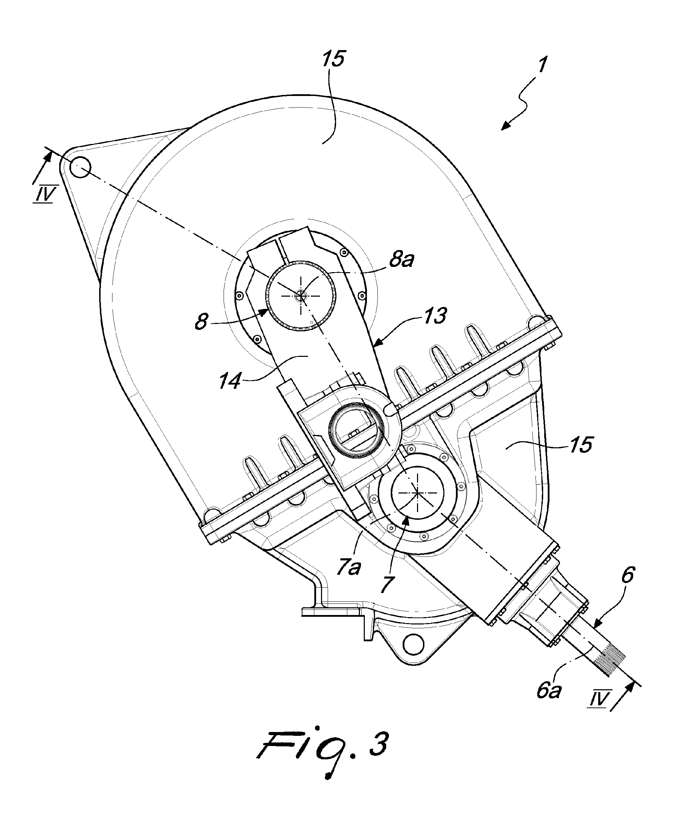

Figure 3 is a lateral elevation view of the reduction gear assembly according to the present invention;

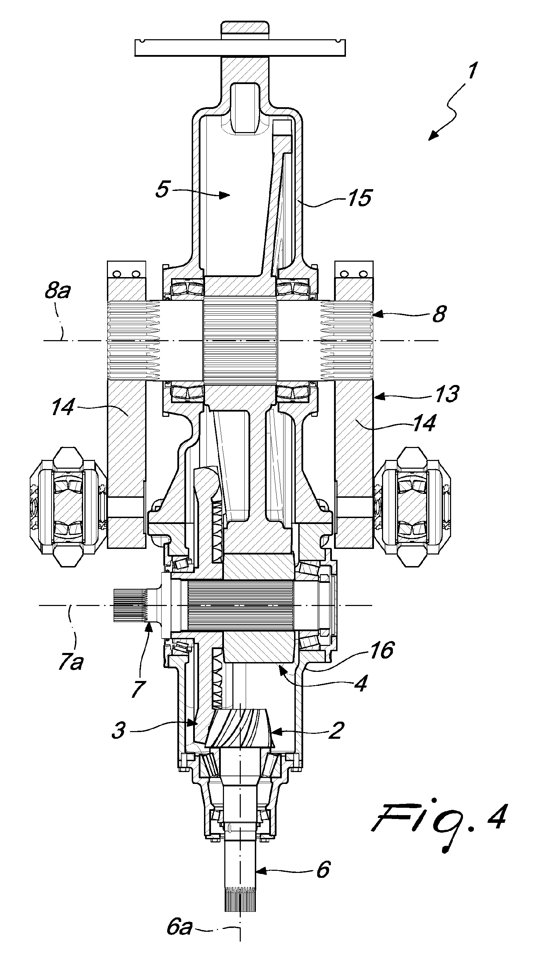

Figure 4 is a sectional view of the reduction gear assembly shown in Figure 3, taken along the plane IV-IV.

With particular reference to the cited figures, the reduction gear assembly, particularly for users with periodic power peaks, generally designated by the reference numeral 1, comprises a train of gears 2, 3, 4 and 5 that mesh together.

More precisely, the reduction gear assembly 1 shown is of the two-stage type and comprises an input stage, composed of the gears 2 and 3, which are of the bevel type, and an output stage, composed of the gears 4 and 5, which are of the cylindrical type.

Alternatively, the reduction gear assembly 1 might be of the single-stage type or of the type with more than two stages.

The input stage is formed between an input shaft 6, on which the first gear 2 is keyed in a cantilever arrangement, and an intermediate shaft 7, on which the second gear 3 is keyed, their rotation axes 6a and 7a being substantially mutually perpendicular.

The output stage is formed between the intermediate shaft 7, on which the third gear 4 is also keyed, and the output shaft 8, on which the fourth gear 5 is keyed, its rotation axis 8a being substantially parallel to the rotation axis 7a of the intermediate shaft 7.

In an alternative embodiment, not shown, the reduction gear assembly might have a different configuration of the axes of rotation of the corresponding shafts and in particular the rotation axes of the input shaft and of the output shaft might be mutually parallel.

According to the invention, the fourth gear 5, which is keyed on the output shaft 8 with which a user device with periodic power peaks, such as for example the pressing piston of a baling press, can be associated, has a face width that is variable along its pitch circle 9.

More specifically, as will be described in greater detail hereinafter, the teeth of the fourth gear 5 are wider in the circular sectors that mesh at the moments of highest power demand.

In the proposed embodiment, the fourth gear 5 comprises a first circular sector 10 that has a face width constant along the pitch circle 9 and at least one second circular sector 11 whose face width along the pitch circle 9 is constant and larger than the face width of the first circular sector 10.

The face widths of the two circular sectors 10 and 11, the angular width of the two circular sectors 10 and 11 and the number of angular sectors with the greater face width depend respectively on the value, duration and number of peaks of the power required by the user device to which the reduction gear assembly 1 is connected.

For example, if the reduction gear assembly 1 is used in baling presses, it is possible to have a single second circular sector 11 with an angular width comprised between 40° and 60°.

Advantageously, for following the development of the power curve of the user device, third circular sectors 12 are comprised between the first circular sector 10 and the second circular sector 11 and have a face width that is variable along the pitch circle 9 of the fourth gear 5 from a minimum value, which is equal to the face width of the first circular sector 10, to a maximum value, which is equal to the face width of the second circular sector 11.

As already mentioned, the reduction gear assembly 1 can be used, according to the invention, in a baling press, not shown, particularly for pressing grass-like material and the like into prism-shaped bales, comprising a forming chamber that can be filled with material to be pressed and a pressing piston that can move alternately in the forming chamber from a top dead center to a bottom dead center.

The movement of the piston, which is required for the pressing of the material to be pressed, can be provided by means of a crank system 13, which can be associated with a rotating driving shaft, connected directly to the power take-off of the tractor that tows the baling press, by means of said reduction gear assembly 1.

More precisely, said rotating driving shaft is functionally associated with the input shaft 6 of the reduction gear assembly 1 and the crank system 13 comprises at least one crank 14 or, as shown in the cited figures, two cranks 14 which are keyed on the output shaft 8 of the reduction gear assembly 1 and are connected directly to the pressing piston.

Furthermore, in view of the use for which the reduction gear assembly 1 can be destined, for preventing foreign objects from entering its mechanisms there are covering elements 15 and 16 which are adapted to enclose the gears 2, 3, 4 and 5.

The periodic behavior of the power required by the presser piston of the baling press is such as to define a single power peak in the pressing step, differently from the rest of the stroke of the presser piston, which requires less power, needed only to entrain the material to be pressed.

Because of this, the reduction gear assembly 1 is installed on the baling press so that the second circular sector 11, which has the largest face width, starts meshing at the beginning of the pressing of the material to be pressed and ceases meshing at the end of the pressing of said material to be pressed.

In practice it has been found that the reduction gear assembly, particularly for users with periodic power peaks, according to the present invention fully achieves the intended aim and objects, since it makes it possible to reduce considerably its dimensions and weight, as well as its space occupation, by using as an output gear a gear whose face width is variable according to the power curve of the user with which it is associated, replacing a conventional gear having a uniform face width equal to the maximum value, reducing considerably the use of material required for its manufacture.

This advantage in terms of weight and size increases as the reduction ratio increases. As the reduction ratio increases, in fact, the pitch circle of the output gear increases.

Moreover, a weight reduction of the reduction gear assembly leads to a reduction in the energy necessary to actuate it and contributes to fuel energy saving, with an associated reduction in CO₂ emissions on the part of the tractor that tows the baling press in which the reduction gear assembly according to the invention is installed.

The reduction gear assembly, particularly for users with periodic power peaks, thus conceived is susceptible of numerous modifications and variations, all of which are within the scope of the inventive concept.

For example, the inventive concept can be applied to bevel gears or cylindrical gears with straight, helical, double-helix or internal teeth.

Moreover, if the user device on which the reduction gear assembly is installed has several power peaks, even of different intensity, the gear can have several circular sectors with a face width that is increased as a function of the power curve of said user device.

All the details may furthermore be replaced with other technically equivalent elements.

In practice, the materials used, as long as they are compatible with the specific use, as well as the contingent shapes and dimensions, may be any according to the requirements and the state of the art.

The disclosures in Italian Patent Application No. MO2010A000261 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reduction gear assembly (1), particularly for users with periodic power peaks, comprising a train of gears (2, 3, 4, 5) which mutually mesh, **characterized in that** it comprises at least one gear (5) that has a face width variable along the pitch circle (9) of said gear (5).

2. The reduction gear assembly (1) according to claim 1, **characterized in that** said gear (5) is keyed on an output shaft (8) of said reduction gear assembly (1) with which a user device with periodic power peaks is associated.

3. The reduction gear assembly (1) according to one or more of the preceding claims, **characterized in that** said gear (5) comprises a first circular sector (10) that has a face width constant along the pitch circle (9) of said gear (5) and at least one second circular sector (11) whose face width along the pitch circle (9) of said gear (5) is constant and larger than the face width of said first circular sector (10).

4. The reduction gear assembly (1) according to one or more of the preceding claims, **characterized in that** third circular sectors (12) are comprised between said first circular sector (10) and said at least one second circular sector (11) and have a face width that is variable along the pitch circle (9) of said gear (5) from a minimum value, which is equal to the face width of said first circular sector (10), to a maximum value, which is equal to the face width of said second circular sector (11).

5. The reduction gear assembly (1) according to one or more of the preceding claims, **characterized in that** it is of the two-stage type.

6. The reduction gear assembly (1) according to one or more of the preceding claims, **characterized in that** said gear (5) is of the cylindrical type.

7. The reduction gear assembly (1) according to one or more of the preceding claims, **characterized in that** it comprises an input stage composed of bevel gears (2, 3) and an output stage composed of cylindrical gears (4, 5), said input stage being formed between an input shaft (6) and an intermediate shaft (7), whose rotation axes (6a, 7a) are substantially perpendicular to each other, said output stage being formed between said intermediate shaft and said output shaft (8), where the rotation axes (7a, 8a) of said intermediate shaft (7) and said output shaft (8) are substantially parallel to each other.

8. A baling press, particularly for pressing grass-like material and the like into prism-shaped bales, comprising a forming chamber which can be filled with material to be pressed and a pressing piston that can move in a reciprocating manner in said forming chamber from a top dead center to a bottom dead center to press said material to be pressed by means of a crank system (13) associated with a rotating driving shaft, **characterized in that** it comprises a reduction gear assembly (1) according to one or more of the preceding claims, which is interposed between said rotating driving shaft and said crank system (13), said rotating driving shaft being functionally associated with said input shaft (6) and said crank system (13) comprising at least one crank (14) which is keyed onto said output shaft (8), said at least one second circular sector (11) meshing correspondingly at the beginning of the pressing of said material to be pressed and disengaging from meshing correspondingly at the end of the pressing of said material to be pressed.

9. The baling press according to claim 8, **characterized in that** said at least one second circular sector (11) has an angular width comprised between 40° and 60°.
